Europäisches Patentamt

(19) European Patent Office　　(11) Numéro de publication: **0 170 985**
**B1**
Office européen des brevets

⑫　　　　　　　**FASCICULE DE BREVET EUROPEEN**

(45) Date de publication du fascicule du brevet:　　�milintCl.⁴: **H 01 M 2/26,** H 01 M 2/20,
**01.06.88**　　　　　　　　　　　　　　　　　　**H 01 R 4/26**

(21) Numéro de dépôt: **85109281.7**

(22) Date de dépôt: **25.07.85**

(54) Procédé pour améliorer la résistance électique d'une jonction non soudée dans un accumulateur électrique alcalin ou une batterie d'accumulateurs électriques alcalins, et jonction obtenue par ce procédé.

(30) Priorité: **30.07.84 FR 8412054**

(43) Date de publication de la demande:
**12.02.86 Bulletin 86/7**

(45) Mention de la délivrance du brevet:
**01.06.88 Bulletin 88/22**

(84) Etats contractants désignés:
**AT BE CH DE FR GB IT LI LU NL SE**

(56) Documents cités:
**DE - A - 2 061 680**
**DE - B - 2 141 550**
**FR - A - 1 246 656**
**FR - A - 2 134 256**
**FR - A - 2 269 211**
**FR - E - 1 618**
**GB - A - 190 289**

(73) Titulaire: **Société Anonyme dite SAFT, 156, avenue de
Metz, F-93230 Romainville (FR)**

(72) Inventeur: **Boué, Francis, Lieu dit Blanche Baurech,
F-33880 Cambes (FR)**

(74) Mandataire: **Weinmiller, Jürgen et al,
Lennéstrasse 9 Postfach 24, D-8133 Feldafing (DE)**

## Description

La présente invention concerne un procédé pour améliorer la résistance électrique d'une jonction non soudée dans un accumulateur électrique alcalin, ou dans une batterie d'accumulateurs électriques alcalins, et elle concerne également une jonction obtenue par ce procédé.

Un tel accumulateur comporte un faisceau de plaques positives et un faisceau de plaques négatives, ces plaques étant alternées, disposées parallèlement entre elles. Chacune d'elles est munie d'une tête de plaque, les plaques positives et négatives étant respectivement reliées entre elles et à une borne de sortie de courant.

Le montage d'un faisceau de têtes de plaques d'une même polarité peut être réalisé au moyen d'un axe traversant la base de la borne de sortie de courant et les têtes de plaques. Des rondelles métalliques formant entretoises sont habituellement interposées entre les têtes de plaques pour respecter le pas entre ces plaques, l'ensemble étant serré entre deux écrous montés sur l'axe et constituant la jonction.

Dans une batterie d'accumulateurs, on entend par jonction la liaison entre deux connexions appartenant à deux accumulateurs adjacents, cette liaison pouvant constituer un empilement comportant des entretoises et une borne.

On exclut a priori tout procédé mettant en œuvre une soudure qui implique un matériel onéreux et qui ne présente pas toujours une fiabilité suffisante.

Lorsque l'on réalise une jonction du genre boulonnée, rivetée ou analogue, dans un accumulateur alcalin où tous les conducteurs sont en acier ou en alliages d'acier, le problème essentiel qui se pose est celui des résistances électriques de contact entre les différentes faces appartenant à l'empilement formé par tous les éléments de la jonction.

Par le document GB-A 190 289 on connaît deux procédés de connexion électrique entre deux pièces. Selon l'un des procédés, les pièces sont usinées de manière complexe (dents, ondulations) pour devenir complémentaires, ce qui multiplie les zones de contact. Selon l'autre procédé, l'une des pièces est d'une dureté plus élevée que l'autre et comporte des crêtes qui pénètrent dans la face plane de l'autre pièce lorsqu'on serre les deux pièces l'une contre l'autre.

L'invention telle qu'elle est définie dans la revendication 1 permet d'éviter ces inconvénients. En ce qui concerne des exemples préférés de mise en œuvre et de l'utilisation d'une jonction selon la revendication 1, référence est faite aux revendication secondaires.

L'invention sera décrite ci-après plus en détail à l'aide de plusieurs exemples de réalisation et du dessin annexé:

la fig. 1 est une vue schématique en coupe partielle d'une jonction selon l'invention pour accumulateur électrique, avant serrage

la fig. 2 montre la jonction de la fig. 1 après le serrage

la fig. 3 montre schématiquement en coupe partielle deux têtes de plaques usinées pour la mise en œuvre du procédé selon l'invention

la fig. 4 est une vue schématique en coupe partielle d'une variante de jonction avec entretoise et avant serrage

la fig. 5 montre la jonction de la fig. 4 après serrage

les fig. 6 à 9 montrent en coupe schématique des variantes d'entretoises susceptibles d'être utilisées dans la jonction des fig. 4 et 5

la fig. 10 montre des courbes d'évolution de la résistance électrique en fonction de la contrainte de serrage.

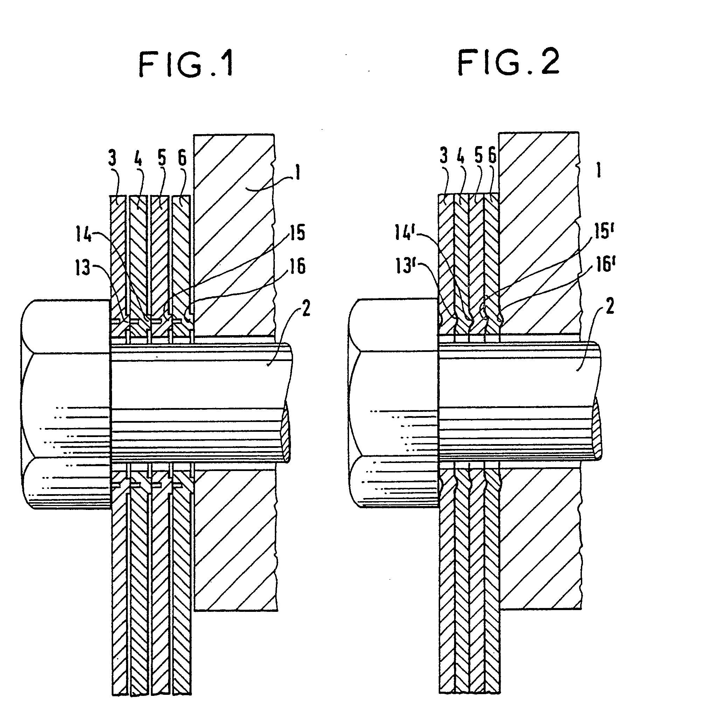

On voit schématiquement dans la fig. 1 une borne métallique 1 sur laquelle est fixé par un axe fileté 2 un ensemble de têtes de plaques d'accumulateur 3, 4, 5, 6. Il s'agit dans ce cas d'un accumulateur alcalin avec des têtes de plaque en acier laminé à froid. De préférence, les têtes de plaques ont été préalablement brossées et dégraissées. Pour fixer les idées, l'épaisseur des têtes de plaques est de 1 mm environ et le diamètre de l'axe 2 est de l'ordre de 10 mm environ. Dans la technique habituelle, on réalise une force de serrage entre les têtes de plaques de l'ordre de 2300 daN et l'on obtient au niveau de chaque interface de l'empilement une résistance électrique de $40\,\mu\Omega$ en moyenne, la surface de contact étant de l'ordre de 400 mm².

Selon l'invention, on prévoit des zones embouties dans chaque plaque 3 à 6 et formant des surépaisseurs 13, 14, 15, 16 par rapport à la surface de ces plaques.

Si l'on se reporte à la fig. 2, les surépaisseurs sont devenues 13', 14', 15', 16' avec l'application de l'effort de serrage et l'on constate de manière tout à fait surprenante qu'il suffit d'appliquer une force F de 1100 daN pour obtenir une résistance de 7 à 8 $\mu\Omega$ au niveau de chaque interface, la surface de contact S étant alors de 22 mm².

Pour le métal des têtes de plaques, la résistance à la rupture R étant de 45 daN/mm², l'effort de serrage F/S est supérieur à la résistance de rupture. Connaissant l'effort de serrage disponible et la résistance à la rupture du matérieu utilisé, il est donc possible de prévoir sensiblement la surface S de contact, autrement dit la forme des surépaisseurs nécessaires au niveau de chaque interface.

Le procédé selon l'invention apporte donc une solution très avantageuse au problème de la réduction des résistances de contact entre les plaques d'une jonction. Pour aboutir à une résistance de l'ordre de 7 à 8 $\mu\Omega$ avec un serrage classique, il faudrait en effet appliquer un effort de serrage de 15 000 daN, ce qui aboutirait à un écrasement de l'ensemble de la jonction.

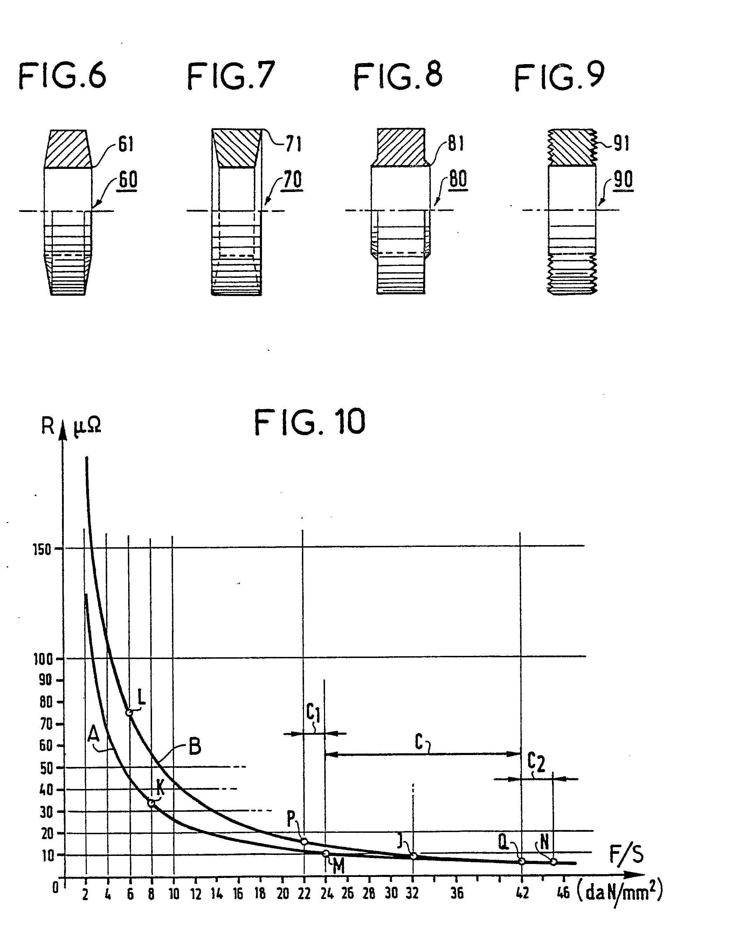

Dans l'exemple qui vient d'être décrit, on a mis en œuvre une contrainte telle que la résistance à la rupture du matériau a été dépassée. Toutefois, il n'est pas nécessaire d'atteindre une telle valeur dans tous les cas. On a reporté dans la fig. 10 deux courbes A et B illustrant les variations des résistances de contact R (en $\mu\Omega$) en fonction des contraintes F/S dans la jonction (en daN/mm²). La courbe A correspond aux valeurs minimales de R par une contrainte donnée. La courbe B correspond aux valeurs maximales.

Les points L en K correspondent aux valeurs obtenues avec les procédés de l'art antérieur; R est comprise entre 75 $\mu\Omega$ et 34 $\mu\Omega$. Dans la zone de contrainte $C_1$ (points P à M) on atteint la limite élastique des feuillards d'acier mis en œuvre dans les jonctions d'un accumulateur selon l'invention. Dans la zone de contrainte $C_2$ (points Q à N), on atteint la valeur de la résistance à la rupture du même matériau. La zone préférée de mise en œuvre du procédé selon l'invention sur la zone C comprise entre $C_1$ et $C_2$. On obtient aisément dans cette zone des résistances de l'ordre de 10 $\mu\Omega$ et inférieures à cette valeur, ce qui constitue un gain très important par rapport aux points L et K. Le point J correpondant à une résistance de moins de 10 $\mu\Omega$ pour une contrainte de 32 daN/mm² est particulièrement avantageux.

Le procédé selon l'invention permet d'améliorer les performances de l'accumulateur. Ainsi, à titre d'exemple, un accumulateur alcalin de 290 Ah fonctionnant à un régime égal à sa capacité, soit 290 A, a une tension de sortie égale à 1,05 volts après 21 minutes de fonctionnement (soit 35% de capacité déchargée). Un accumulateur analogue, mais présentant le perfectionnement selon l'invention, et fonctionnant dans les mêmes conditions a une tension de sortie supérieure de 0,02 volt après la même durée de fonctionnement; cet accumulateur atteint 1,05 volts après 32 minutes de fonctionnement. On constate donc dans cet exemple que l'autonomie de l'accumulateur selon l'invention est accrue de plus de 50% pour une tension d'arrêt de 1,05 volt.

On indique ci-dessous une autre façon de mettre en évidence les avantages apportés par l'invention.

Généralement, on utilise un accumulateur chargé à 100%, on le décharge à une intensité constante et on arrête la décharge dès que la tension atteint une valeur fixée à l'avance. Pour un accumulateur de l'art antérieur chargé à 100% on décharge pendant 1 heure jusqu'à 1,10 volt avec une intensité de 181 A. Pour un accumulateur selon l'invention fonctionnant dans les mêmes conditions on obtient un courant de 192 A, soit un gain de 5,8%.

Selon les applications, on constate que le gain en performances apporté par l'invention est en moyenne de 5%, mais peut atteindre 8%.

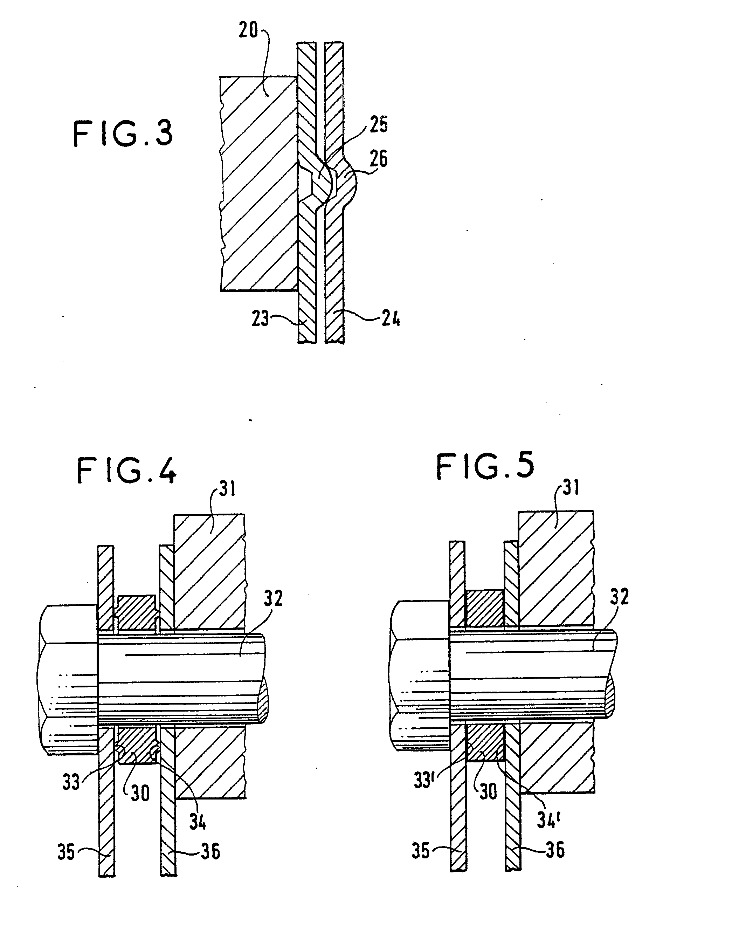

On voit dans la fig. 3 une borne 20 et deux têtes de plaques 23 et 24 de même nature que les têtes de plaques 3 et 4 des fig. 1 et 2. Des surépaisseurs 25, 26 sont réalisées par une variante d'emboutissage.

On a reporté dans la fig. 4 une tige 32 sur laquelle on serre une borne 31, deux têtes de plaques 35 et 36 à faces planes entre lesquelles on a disposé une entretoise métallique 30 à deux bossages 33 et 34. Après serrage selon l'invention, ces bossages deviennent 33' et 34' (voir fig. 5).

Les fig. 6 à 9 montrent en coupe quatre variantes 60, 70, 80, 90 de l'entretoise 30.

Les surépaisseurs 61, 71, 81, 91 sont obtenues par différents usinages en cônes, chanfrein, taraudage. Tout autre moyen équivalent peut être mis en œuvre.

Bien entendu, l'invention n'est pas limitée à ces modes de réalisation. Il n'est pas nécessaire que tous les éléments métalliques d'une même jonction soient en des aciers de même dureté; le procédé s'avère très efficace pour des aciers de duretés différentes. Les surépaisseurs peuvent se situer indifféremment sur les pièces les plus dures ou les moins dures.

Il n'est pas nécessaire non plus que les surépaisseurs situées sur les conducteurs pénètrent dans le conducteur adjacent, ou qu'elles soient totalement écrasées. Dans le cas où la contrainte de serrage reste inférieure à la résistance à la rupture, les surépaisseurs ne sont jamais totalement écrasées.

On pourra sans sortir du cadre de l'invention, remplacer tout moyen par un moyen équivalent.

**Revendications**

1. Procédé pour réduire la résistance électrique d'une jonction non soudée dans un accumulateur électrique alcalin ou une batterie d'accumulateurs électriques alcalins, ladite jonction comportant un empilement de plusieurs éléments en un métal choisi parmi l'acier ou ses alliages juxtaposés et solidarisés par un moyen de serrage, caractérisé par le fait que l'on prévoit, au niveau de chaque interface dudit empilement, au moins sur l'une des deux faces en regard l'une de l'autre une surépaisseur (13, 14, 15, 16), et que l'on réalise un serrage permettant d'atteindre au moins la limite élastique du métal.

2. Procédé selon la revendication 1, caractérisé par le fait que ledit empilement étant formé d'un faisceau de têtes de plaques de même polarité (3, 4, 5, 6) et d'une borne métallique (1), on prévoit ladite surépaisseur sur une face de chacune des têtes de plaques.

3. Procédé selon la revendication 2, caractérisé par le fait que l'on dispose dans ledit empilement des intercalaires du genre rondelles ou entretoises (30) entre lesdites têtes de plaques (35, 36) et que les surépaisseurs de métal (33, 34) sont réalisées sur les faces desdits intercalaires.

4. Procédé selon l'une des revendications 1 à 3, caractérisé par le fait que lesdites surépaisseurs sont obtenues par moletage, emboutissage.

5. Procédé selon l'une des revendications 1 à 4, caractérisé par le fait que lesdites faces dudit empilement ont été préalablement brossées et dégraissées.

6. Utilisation de la jonction obtenue par le procédé selon l'une des revendications 1 à 5 dans un accumulateur électrique alcalin ou une batterie d'accumulateurs électriques alcalins.

7. Utilisation de la jonction obtenue par le procédé selon la revendication 1 dans un accumulateur électrique alcalin comportant un empilement de ttes de plaques en un métal choisi parmi l'acier ou ses alliages, serré par un moyen de serrage, caractérisée par le fait qu'il existe au niveau de chaque interface dudit empilement une zone où le métal a dépassé sa limite élastique.

8. Utilisation de la jonction obtenue par le procédé selon la revendication 1 dans une batterie d'accumulateurs électriques alcalins comportant un empilement de plusieurs éléments juxtaposés en un métal choisi parmi l'acier et ses alliages, dont au moins deux connexions électriques appartenant à deux accumulateurs adjacents, l'ensemble étant maintenu par un moyen de serrage, caractérisée par le fait qu'il existe au niveau de chaque interface dudit empilement une zone où le métal a dépassé sa limite élastique.

**PatentansprücheE**

1. Verfahren zur Verringerung des elektrischen Widerstandes einer nicht geschweissten Verbindung in einem alkalischen Akkumulator oder einer Batterie von alkalischen elektrischen Akkumulatoren, wobei die Verbindung einen Stapel von mehreren einander benachbarten und durch Spannmittel miteinander verbundenen Elementen umfasst, die aus einem Stahl oder seinen Legierungen bestehen, dadurch gekennzeichnet, dass auf mindestens einer der beiden einander gegenüberstehenden Flächen jeder Stossstelle des Stapels eine Verdickung (13, 14, 15, 16) vorhanden ist und dass der Stapel mindestens bis zur Elastizitätsgrenze des Metalls festgespannt wird.

2. Verfahren nach Anspruch 1, dadurch gekennzeichnet, dass bei dem aus einer Schar Plattenköpfe derselben Polarität (3, 4, 5, 6) und einer Metallklemme (1) bestehenden Stapel die Verdickungen auf einer Seite jedes Plattenkopfes angebracht sind.

3. Verfahren nach Anspruch 2, dadurch gekennzeichnet, dass im Stapel Zwischenlagen von der Art von Beilagscheiben oder Abstandhaltern (30) zwischen den Plattenköpfen (35, 36) angebracht sind und dass sich die Metallverdickungen (33, 34) auf der Seite der Zwischenlagen befinden.

4. Verfahren nach einem der Ansprüche 1 bis 3, dadurch gekennzeichnet, dass die Verdickungen durch Prägen und Tiefziehen erzeugt werden.

5. Verfahren nach einem der Ansprüche 1 bis 4, dadurch gekennzeichnet, dass die genannten Flächen des Stapels zuvor abgebürstet und entfettet werden.

6. Verwendung der gemäss dem Verfahren nach einem der Ansprüche 1 bis 5 erhaltenen Verbindung in einem alkalischen elektrischen Akkumulator oder einer Batterie von alkalischen elektrischen Akkumulatoren.

7. Verwendung der gemäss dem Verfahren nach Anspruch 1 erhaltenen Verbindung in einem alkalischen elektrischen Akkumulator, mit einem Stapel metallischer Plattenköpfe aus Stahl oder seinen Legierungen, der durch Spannmittel zusammengespannt ist, dadurch gekennzeichnet, dass es im Bereich jeder Stossstelle des Stapels eine Zone gibt, in der Metall seine Elastizitätsgrenze überschritten hat.

8. Verwendung der gemäss dem Verfahren nach Anspruch 1 erhaltenen Verbindung in einer Batterie von alkalischen elektrischen Akkumulatoren, mit einem Stapel aus mehreren einander benachbarten Metallelementen aus Stahl und seinen Legierungen, wobei mindestens zwei elektrische Anschlüsse zwei benachbarten Akkumulatoren angehören und das Ganze durch Spannmittel zusammengehalten wird, dadurch gekennzeichnet, dass es im Bereich jeder Stossstelle des Stapels eine Zone gibt, in der Metall seine Elastizitätsgrenze überschritten hat.

**Claims**

1. A method of reducing the electrical resistance of a non-welded junction in an alkaline electrical storage cell or in a battery of alkaline electrical storage cells, said junction comprising a stack of a plurality of components made of a metal selected from steel and alloys of steel, said components being juxtaposed and fixed together by clamping means, the method being characterized by the fact that each interface in said stack is provided on at least one of the two faces that face each other with a bump (13, 14, 15, 16), and clamping is performed suitable for reaching at least the elastic limit of the metal.

2. A method according to claim 1, characterized by the fact that with said stack comprising a bundle of same polarity plate heads (3, 4, 5, 6) and a metal terminal (1), said bumps are provided on one of the faces of each of said plate heads.

3. A method according to claim 2, characterized by the fact that intermediate members of the washer or spacer (30) type are disposed in said stack between said plate heads (35, 36), and that the metal bumps (33, 34) are provided on the faces of said intermediate members.

4. A method according to any one of claims 1 to 3, characterized by the fact that said bumps are obtained by knurling or embossing.

5. A method according to any one of claims 1 to 4, characterized by the fact that said faces of said stack are prior brushed and degreased.

6. Utilization of the junction obtained by the method according to any one of claims 1 to 5, in an alkaline electric storage cell or in a battery of alkaline electric storage cells.

7. Utilization of the junction obtained by the method according to claim 1, in an alkaline electric storage cell comprising a stack of plate heads made of a metal selected from steel and alloys thereof and clamped together by clamping means, characterized by the fact that there is a zone at each interface in said stack where the metal has passed its elastic limit.

8. Utilization of the junction obtained by the method according to claim 1 in a battery of alkaline electric storage cells comprising a stack of a plurality of juxtaposed components made of a metal selected from steel and alloys thereof, with at least two of the electric connections belonging to two adjacent electric storage cells, the assembly being held together by clamping means, characterized by the fact that there exists a zone in each interface of said stack where the metal has exceeded its elastic limit.

# FIG.1

# FIG.2

**FIG.3**

**FIG.4**

**FIG.5**

# FIG.6  FIG.7  FIG.8  FIG.9

# FIG. 10